# EUROPEAN PATENT APPLICATION

(11) **EP 2 738 648 A1**
(43) Date of publication of application: **04.06.2014**
(21) Application number: 12787345.3
(22) Date of filing: 16.07.2012
(51) Int. Cl.: G06F 3/01

(54) **DISPLAY SYSTEM**

(30) Priority: 25.07.2011 CN 201110209094
(71) Applicant: Boe Technology Group Co. Ltd., Beijing 100015 (CN); Beijing BOE Display Technology Co., Ltd., Beijing 100176 (CN)
(72) Inventor: YUAN, Jianfeng, Beijing 100176 (CN); ZHANG, Jiannan, Beijing 100176 (CN); RIM, Seungmoo, Beijing 100176 (CN); ZHANG, Zhenyu, Beijing 100176 (CN); ZHENG, Qiang, Beijing 100176 (CN)
(74) Representative: Brötz, Helmut
(86) International application number: PCT/CN2012/078724
(87) International publication number: WO 2013/013583

(57) **Abstract**

An embodiment of the present invention provides a display system, and the display system comprises a light beam emitting device, emitting a first light beam for marking an input position and a second light beam for confirming the input position, the first light beam being visible light, and the second light beam differing from the first light beam; and a display device, comprising a displaying area, photo-sensitive devices distributed within the displaying area, processing devices coupled with the photo-sensitive devices. The photo-sensitive devices are used for sensing the second light beam projected upon the displaying area and achieving a sensing result; the processing devices are used for determining the projecting position of the second light beam upon the displaying area according to the sensing result, and performing a corresponding operation based on the sensing result. The present invention is capable of performing remote touch operation on the display device.

## Description

### TECHNICAL FIELD

An embodiment of the present invention relates to a display system.

### BACKGROUND

As time moves on, touch screens have been becoming more and more popular in applications. Most of the current touch techniques carry out touch operations of the touch screen by a way of close touch, such as direct touch, close light sensation, or the like. However, in some instances, the close touch brings inconvenience to users. For example, there always exits a long distance between users and a touch screen when the users are watching TV programs through a television display device comprising the touch screen, and when touch operations on the touch screen are needed, it is necessary for a user to proceed to the front of the touch screen to perform touch operations, which is greatly inconvenient.

### SUMMARY

An embodiment of the present invention provides a display system, which can perform long-range touch operations on a display device.

The embodiment of present invention provides a display system, comprising: a light beam emitting device, emitting a first light beam for marking an input position and a second light beam for confirming the input position, the first light beam being visible light, and the second light beam differing from the first light beam; a display device, comprising a displaying area, photo-sensitive devices distributed within the displaying area, and processing devices coupling with the photo-sensitive devices. The photo-sensitive devices are used for sensing the second light beam projected upon the displaying area and achieving a sensing result; the processing devices are used for determining the projecting position of the second light beam upon the displaying area according to the sensing result, and performing a corresponding operation based on the sensing result.

For example, the light beam emitting device comprises: a body; a two-step button, provided on the body; a light-emitting assembly, provided on the body, used for emitting the first light beam and the second light beam; a control assembly disposed in the body, connected with the two-stage button and the light-emitting assembly for detecting the positions of the two-stage button so as to emit the first and second light beams at different positions respectively.

For example, the two-stage button can descend to the first height or the second height under pressing, and the second height is less than the first height; the control assembly is used for detecting the heights of the two-stage button, and controlling the light-emitting assembly to emit the first light beam when detecting the two-stage button is pressed to the first height and controlling the light-emitting assembly to emit the second light beam when detecting the two-stage button is pressed to the second height.

For example, display device further comprises: a color filter substrate and an array substrate, wherein the color filter substrate comprises a plurality of pixels each at least having sub-pixel of a first color, the second light beam is a light beam capable of transmitting through the sub-pixel of the first color, the photo-sensitive devices are disposed at positions where the second light beam passing through the sub-pixels of the first color can be received.

For example, the photo-sensitive devices are arranged on the array substrate at the positions corresponding to the sub-pixels of the first color.

For example, each of the sub-pixels of the first color corresponds to one of the photo-sensitive devices, or every a plurality of sub-pixels of the first color correspond to one of the photo-sensitive devices.

For example, the sub-pixels of the first color are red sub-pixels, blue sub-pixels or green sub-pixels.

For example, a wavelength of the first light beam is different from that of the second light beam, and the photo-sensitive device are adapted to transmit their own address information, as the sensing result, to the processing devices when detecting a light beam of first color of a preset intensity, which less than the intensity of the second light beam but greater than the intensity of the light beam of the first color from ambient light.

For example, a wavelength of the first light beam is the same as that of the second light beam, and the photo-sensitive device are adapted to transmit their own address information, as a sensing result, to the processing devices when detecting a light beam of first color of a preset intensity, which less than the intensity of the second light beam but greater than the intensity of the light beam of the first color from ambient light.

For example, display system comprises one light beam emitting device and more than one display device.

For example, the display system comprises one light beam emitting device and one display device which comprises more than one displaying area.

With the embodiments of present invention, a user can send remotely a first light beam and a second light beam toward a display device through a light beam emitting device, wherein the first light beam is used for the positioning of points in the displaying area of a display device, and the second light beam is used for the touch of the points in the displaying area. Photo-sensitive devices, which is capable of sensing the second light beam, are arranged within the displaying area, and with sensing results from the photo-sensitive device, it is possible to determine the projecting position of the second light beam onto the displaying area, then corresponding operations, such as ascertaining operation, handwriting operation, cursor-dragging operation and the like, can be carried out based on the projecting position of the second light beam, so as to make long-range touch operations upon the display device.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 is a structural schematic view of a display system according to the present invention;
Fig. 2 is a structural schematic view of a light beam emitting device of the present invention;
Fig. 3 is a structural perspective view of a display device of the present invention.

### DETAILED DESCRIPTION

Further detailed description is made for the specific embodiments of the present invention below in conjunction with the attached drawings and examples.

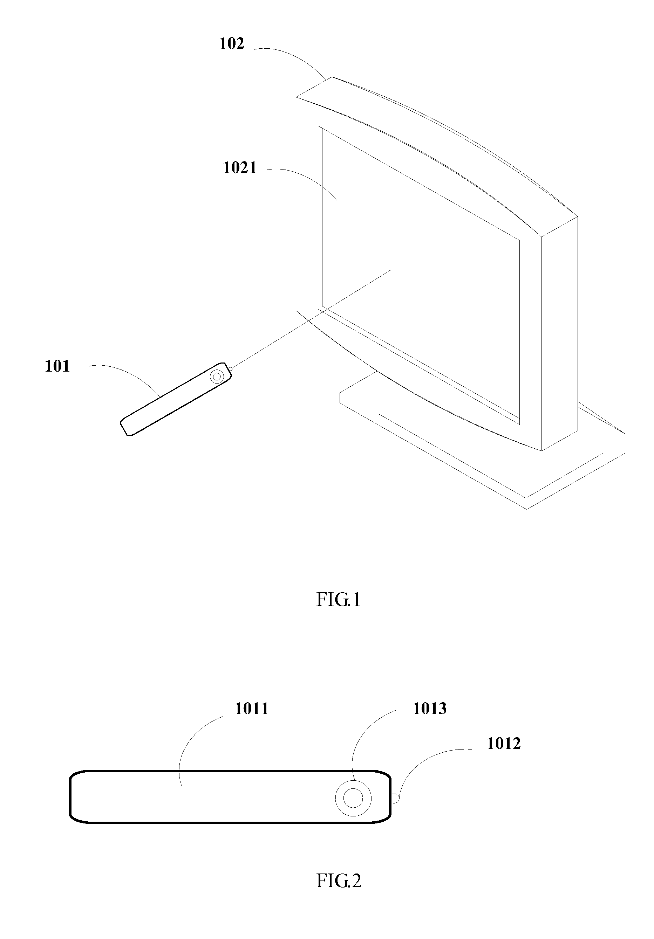

Fig.1 is a structural schematic view of a display system 100 of the present invention. The display system 100 comprises a light beam emitting device 101 and a display device 102. The display device 102 comprises a displaying area 1021 and a periphery area 1022 not for displaying. The light beam emitting device 101 can emit a first light beam and a second light beam. The first light beam is a positioning light beam for positioning the locations (points) to be touched in the displaying area 1021, i.e., for marking the input positions in the displaying area 1021, and since the positioning process should be visible for human eyes, the first light beam is visible light. The second light beam is a triggering light beam for carrying out touch operations in the displaying area 1021, that is, for determining the input positions marked by the first light beam. The second light beam is different from the first light beam, and the difference may lie in intensities, wavelengths, the cross-sectional dimensions of the light beams, or the like.

In order to sense the second light beam emitted from the light beam emitting device 101 as well as perform corresponding operations upon sensing the second light beam, the display device 102 further comprises photo-sensitive devices (not shown) distributed within the displaying area 1021 and processing devices (not shown) coupled with the photo-sensitive devices. The photo-sensitive devices are used for sensing the second light beam projected onto the displaying area 1021 and then obtaining a sensing result. The processing devices are used for determining the projecting position of the second light beam upon the displaying area 1021 according to the sensing results, and performing a corresponding operation based on the sensing result.

The photo-sensitive device may be various types of photo-sensitive devices, e.g., photo-sensitive diodes, photo-sensitive CMOS (complementary metal oxide semiconductor) or photoconductive TFT (thin film transistor) and the like. The display device 102 can comprise a plurality of photo-sensitive devices, which are distributed within the displaying area 1021, and each of which corresponds to the information of one address. When any one of the photo-sensitive devices senses the second light beam emitted from the light beam emitting device 101, its own address information is transmitted, as a sensing result, to the processing device; then the processing device determines the projecting position of the second light beam upon the displaying area 1021 based on the address information of the photo-sensitive device, and corresponding operations are performed accordingly.

The light beam emitting device 101 may be an individual physical device, or may be integrated within other physical devices, for example, in a TV remote controller or a cell phone.

User may use the light beam emitting device 101 to emit the second light beam, so as to implement ascertaining operation with respect to the points in the displaying area 1021, which is similar to a point-and-click operations of a mouse, implement operations similar to the handwriting operations or posture operations in the displaying area 1021, implement an operation similar to a cursor-dragging of a mouse, or the like. These operations or operation modes can be for example preset and stored in a controller.

The light beam emitting device 101 can control the emission of the first light beam and the second light beam in various ways, which will be explained by way of examples.

As shown in Fig. 2, an example of the light beam emitting device 101 comprises a body 1011 and a light-emitting assembly 1012; the body 1011 may be embodied in various configurations instead of being limited to that as shown in the figures when the light beam emitting device 101 is an individual physical device, or may be the body of a TV remote controller when the light beam emitting device 101 is integrated into another physical device, for example, into the TV remote controller. The light-emitting assembly 1012 is provided on the body 1011 and used for emitting the first light beam and the second light beam. The light-emitting assembly 1012 may be a light-emitting device such as a light-emitting diode (LED) or the like.

In order to control the emission of the first light beam and the second light beam, light beam emitting device 101 may further comprise a two-stage button 1013 and a control assembly (not shown); the two-stage button 1013 is positioned on the body 1011, and for example, the two-stage button 1013 is provided on one side of the body 1011. One implementation of the two-stage button 1013 can descend to a first height or a second height when it is pressed by a pressing force of different magnitude, and the second height is less than the first height. The control assembly is provided in the body 1011 and connected with the two-stage button 1013 and the light-emitting assembly 1012 to detect the height of the two-stage button 1013; the control assembly controls the light-emitting assembly 1012 to emit the first light beam when it detects that the two-stage button 1013 is pressed down to the first height, or controls light-emitting assembly 1012 to emit the second light beam when it detects the two-stage button 1013 is pressed down to the second height.

The aforesaid control mode of the two-stage button 1013 is similar to that for a digital camera, i.e., gently pressing the shutter for focusing and heavily pressing for taking picture. A user can gently press the two-stage button 1013 to make the two-stage button 1013 descend to the first height, and when the control assembly detects that the two-stage button 1013 descends to the first height, the control assembly controls the light-emitting assembly 1012 to emit the first light beam so as to position the point to be touched in the displaying area 1021. After positioning, the user can heavily press the two-stage button 1013 to make the two-stage button 1013 descend to the second height, and when the control assembly detects that the two-stage button 1013 descend to the second height, the control assembly controls the light-emitting assembly 1012 to emit the second light beam so as to perform a touch operation with respect to the above set point.

Naturally, the light beam emitting device 101 can also control the emission of the first light beam and the second light beam in other ways as well, for example, two buttons (a first button and a second button) are provided, and the first button is pressed for emitting the first light beam, and the second button is pressed for emitting the second light beam.

Alternatively, a sliding block and a sliding rail can be provided on the light beam emitting device 101, and the first light beam is emitted when the sliding block moves from an initial position on the sliding rail to a first position, and the second light beam is emitted when the sliding block moves from the first position to a second position.

Of course, any other suitable structures can further be used for the light beam emitting device 101 to control the emission of the first light beam and the second light beam, of which the detailed description is omitted here.

As mentioned above, a plurality of photo-sensitive devices are used to sense the second light beam emitted from the light beam emitting device 101 and projected onto the displaying area 1021, the photo-sensitive devices can be distributed evenly within the displaying area 1021, each of which corresponds the information of one address, and the position of the second light beam in the displaying area 1021 can be determined through the detected photo-sensitive device which has sensed the second light beam.

The setting of the positions of the photo-sensitive devices always depends on the positions of the pixels on the display device 102, as will be explained in detail in the following.

In the embodiment of the present invention, the present invention is explained by taking a liquid crystal display device as an example of the display device but not limited thereto. A liquid crystal display device typically comprises a color filter substrate, an array substrate and a liquid crystal layer interposed therebetween. The color filter substrate can comprise a plurality of pixels, each of which at least comprises a sub-pixel of a first color, and the sub-pixel of the first color may be a red sub-pixel, a green sub-pixel, a blue sub-pixel or a sub-pixel of other colors. The red sub-pixel can only transmit red light, the green sub-pixel can only transmit green light, and the blue sub-pixel can only transmit blue light.

For example, the second light beam can be preset as a light beam capable of transmitting through the sub-pixel of the first color, that is, the second light beam is a light beam of the first color, and in order to sense the second light beam, the photo-sensitive devices are disposed at the positions where the second light beam, passing through the sub-pixels of the first color, can be received, for example, are arranged on the array substrate at the places corresponding to the sub-pixels of the first color.

In addition, the distribution density of the photo-sensitive devices within the displaying area can vary according to the requirement for positioning accuracy. For example, each of the sub-pixels of the first color can correspond to one of the photo-sensitive devices when the requirement for the positioning accuracy is high; every a plurality of sub-pixels of the first color can correspond to one of the photo-sensitive devices when the requirement for the positioning accuracy is low.

As already mentioned in the above embodiment, the first light beam differs from the second light beam, and for example, the wavelength of the first light beam can differ from that of the second light beam (i.e., different color). When second light beam is a light beam of the first color, the photo-sensitive device can be set to transmit its own address information to the processing device only when a light beam of the first color is detected, so as to avoid the interference from the first light beam. In addition, in order to avoid interference from the ambient light projected onto the displaying area 1021, the photo-sensitive device can be set to transmit its own address information, as a sensing result, to the processing device only when a light beam of the first color and a preset intensity is detected, and the preset intensity needs to be substantially greater than the intensity of the light beam of the first color of the ambient light, but slightly less than that of the second light beam.

Furthermore, the wavelength of the first light beam can be the same as that of the second light beam, but its intensity is less than that of the second light beam, when the second light beam is a light beam of the first color, in order to avoid interference from both the first light beam and the light beams of the first color of ambient light, the photo-sensitive device can be set to transmit its own address information, as a sensing result, to the processing device only when a light beam of the first color and a preset intensity is detected, and it's necessary for the preset intensity to be greater than both the intensity of the light beams of the first color of the ambient light and the intensity of the first light beam, but less than that of the second light beam.

The first light beam and the second light beam can be various kinds of light beams. Laser, due to its characteristics such as better orientation property, smaller divergence angle, etc. compared with other types of light beams, is usually used for the first light beam and the second light beam. Specific embodiments of the display system according to the present invention will be described below, and the case in which the first light beam and the second light beam are lasers of different intensities and different wavelengths respectively is taken as an example.

### First Embodiment:

In consideration of the fact that red light is easily attainable, in the embodiment of the present invention, a red laser within the visible range is used for the first light beam and the second light beam of the light beam emitting device, and the intensity of the first light beam is a first intensity, and the intensity of the second light beam is a second intensity, and the second intensity is greater than the first intensity.

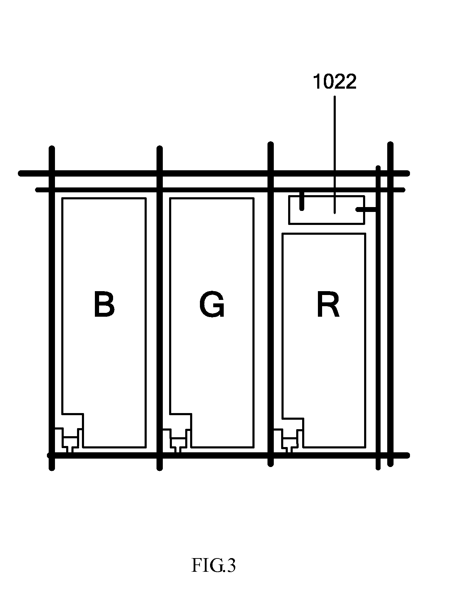

With reference to Fig.3, the pixels in the color filter substrate comprise sub-pixels of three colors, that is, the red (R) sub-pixels, the green (G) sub-pixels, and blue (B) sub-pixels; the photo-sensitive devices 1022 are positioned on the array substrate at a place corresponding to the red sub-pixels, and the photo-sensitive device 1022 is set to transmit its own address information to the processing device only when a light beam of the second intensity is detected. To avoid the influence of the first light beam on the photo-sensitive devices 1022, properly large difference can be preset between the intensity of the first light beam and the intensity of the second light beam.

In the case that a two-stage button is involved in the light beam emitting device, when the two-stage button is pressed gently, the first light beam of low intensity is triggered to locate a point A to be operated in the displaying area of the display device. After positioning, the two-stage button is pressed heavily, the second light beam of high intensity is triggered and is detected by the photo-sensitive device 1022 corresponding to the point A, and then the photo-sensitive device 1022 transmits its own address information to the processing unit; the processing unit determines the positional information of the second light beam in the displaying area based on the address information transmitted from the photo-sensitive device 1022, and thus carry out corresponding touch operations.

The above has an advantage in that light beams (red light beam) of only one wavelength is used for positioning and triggering, different controls can be implemented by regulating the intensities of the two light beams, thus manufacturing costs are low.

### Second Embodiment:

In this embodiment of the present invention, the first light beam from the light beam emitting device adopts a green laser within the visible range, and the second light beam adopts a red laser and can be visible or invisible light.

Likewise, for example, the pixels on the color filter substrate comprise sub-pixels of three colors, that is, red sub-pixels, green sub-pixels and blue sub-pixels, and the photo-sensitive devices 1022 are provided on the array substrate at places corresponding to the red sub-pixels.

Given that a two-stage button is involved in the light beam emitting device, when the two-stage button is pressed gently, the green laser (first light beam) is emitted to locate a point A to be operated in the displaying area of the display device. After positioning, the red laser (second light beam) is triggered and is detected by the photo-sensitive device 1022 corresponding to the point A, and then the photo-sensitive device1022 transmits its own address information to the processing unit; the processing unit determines the positional information of the second light beam in the displaying area based on the address information transmitted from the photo-sensitive device 1022 and thus carry out corresponding touch operations.

The advantage of the above embodiment is that interference from positioning light beam can be avoided by using light beams having two kinds of wavelengths, thus incorrect operations can be restrained.

An embodiment of the present invention also provides a light beam emitting device, comprising: a body; a two-stage button, which is provided on the body and can descend to a first height or a second height upon the pressing force of different magnitudes, the second height being less than the first height; a light-emitting assembly, provided on the body and used for emitting the first light beam and the second light beam, and the first light beam being visible and different from the second light beam; a control assembly, which is provided in the body and connected with the two-stage button and the light-emitting assembly to detect the height of the two-stage button, and controls the light-emitting assembly to emit the first light beam when it detects that the two-stage button is pressed down to the first height, or controls the light-emitting assembly to emit the second light beam when it detects that the two-stage button is pressed down to the second height.

A user can emit remotely the first light beam and the second light beam through the light beam emitting device, in which the first light beam is used for the positioning of points in the displaying area of a display device, and the second light beam is used for the touch of the points in the displaying area. Photo-sensitive devices are arranged within the displaying area and are capable of sensing the second light beam; with the sensing results from the photo-sensitive devices, it is possible to determine the projecting positions of the second light beam onto the displaying area, then corresponding operations, such as ascertaining operation, handwriting operation, cursor-dragging operation and the like, can be carried out based on the projecting positions of the second light beam so as to conduct long-range touch operations upon the display device.

An embodiment of the present invention also provides a display device, the display device comprising a displaying area, photo-sensitive devices distributed within the displaying area, and processing devices coupled with the photo-sensitive devices; the photo-sensitive devices are used for sensing the preset light beam projected onto the displaying area and obtaining a sensing result, the processing devices are used to determine the projecting position of a preset light beam in the displaying area according to the sensing result, and perform a corresponding operation according to the projecting position of the preset light beam.

The display device is same as the display devices in any of the above embodiments in structure and is used to cooperate with the light beam emitting device in the above embodiments, and the preset light beam is the second light beam emitted by the light beam emitting device.

At the same time, there may be provided a plurality of display devices, or one display device may comprise a plurality of displaying areas, and a plurality of pictures within the displaying areas can be controlled with one light beam emitting device respectively, which accordingly provides more diversified manipulating functions.

The above described is just preferred embodiments of present invention, it should be noted various modification and refinement can be made by the ordinary skilled in this art without departing from the principle of this invention, which should be regarded as the protective scope of this invention.

## Claims

1. A display system, comprising:
a light beam emitting device, emitting a first light beam for marking an input position and a second light beam for confirming the input position, the first light beam being visible light, and the second light beam differing from the first light beam; and
a display device, comprising a displaying area, photo-sensitive devices distributed within the displaying area, processing devices coupled with the photo-sensitive devices, wherein the photo-sensitive devices are used for sensing the second light beam projected upon the displaying area and achieving a sensing result; the processing devices are used for determining the projecting position of the second light beam upon the displaying area according to the sensing result, and performing a corresponding operation based on the sensing result.

2. The display system according to claim 1, wherein the light beam emitting device comprising:
a body;
a two-stag button provided on the body;
a light-emitting assembly positioned on the body and used for emitting the first light beam and the second light beam; and
a control assembly disposed in the body, connected with the two-stage button and the light-emitting assembly for detecting the positions of the two-stage button so as to emit the first and second light beams at different positions respectively.

3. The display system according to claim 2, wherein the two-stage button is capable of descending to a first height or a second height less than the first height under pressing;
the control assembly is used for detecting the heights of the two-stage button, and controlling the light-emitting assembly to emit the first light beam when detecting the two-stage button is pressed to the first height and controlling the light-emitting assembly to emit the second light beam when detecting the two-stage button is pressed to the second height.

4. The display system according to any one of claims 1 to 3, wherein the display device further comprising:
a color filter substrate and an array substrate,
wherein the color filter substrate comprises a plurality of pixels each at least having sub-pixel of a first color, the second light beam is a light beam capable of transmitting the sub-pixels of the first color, the photo-sensitive devices are disposed at positions where the second light beam passing through the sub-pixels of the first color can be received.

5. The display system according to claim 4, wherein the photo-sensitive devices are arranged on the array substrate at the positions corresponding to the sub-pixels of the first color.

6. The display system according to claim 5, wherein each of the sub-pixels of the first color corresponds to one of the photo-sensitive devices, or every a plurality of sub-pixels of the first color correspond to one of the photo-sensitive devices.

7. The display system according to any one of claims 4 to 6, wherein the sub-pixels of the first color are red sub-pixels, blue sub-pixels or green sub-pixels.

8. The display system according to any one of claims 4 to 7, wherein a wavelength of the first light beam is different from that of the second light beam, and the photo-sensitive devices are adapted to transmit their own address information, as the sensing result, to the processing devices when detecting a light beam of first color of a preset intensity, which less than the intensity of the second light beam but greater than the intensity of the light beam of the first color from ambient light.

9. The display system according to any one of claims 4 to 7, wherein a wavelength of the first light beam is the same as that of the second light beam, but intensity of the first light beam is weaker than that of the second light beam, and the photo-sensitive devices are adapted to transmit their own address information, as the sensing result, to the processing devices when detecting a light beam of first color of a preset intensity, which less than the intensity of the second light beam but greater than the intensity of the first light beam and the intensity of the light beam of the first color from ambient light.

10. The display system according to any one of claims 1 to 9, wherein the display system comprises one light beam emitting device and more than one display device.

11. The display system according to any one of claims 1 to 9, wherein the display system comprises one light beams emitting device and one display device which comprises more than one displaying area.
